# EUROPEAN PATENT SPECIFICATION

(11) **EP 1 491 426 B1**
(45) Date of publication and mention of the grant of the patent: **14.04.2010**
(21) Application number: 04014607.8
(22) Date of filing: 22.06.2004
(51) Int. Cl.: B62D 5/087, B62D 5/09

(54) **Flow controlling apparatus for a power steeering system**
Durchflussregler für eine Servolenkung
Contrôleur de débit pour un système de direction assisté

(30) Priority: 23.06.2003 JP 2003177711
(43) Date of publication of application: 29.12.2004
(73) Proprietor: JTEKT CORPORATION, Chuo-ku, Osaka (JP)
(72) Inventor: Ikeda, Tsuyoshi; c/o JTEKT Corporation, Chuo-ku, Osaka (JP)
(74) Representative: TBK-Patent

(56) References cited:
- EP-A- 1 108 638
- US-A- 5 207 239
- US-B1- 6 179 082
- PATENT ABSTRACTS OF JAPAN vol. 2000, no. 26, 1 July 2002 (2002-07-01) & JP 2001 260917 A (KAYABA IND CO LTD), 26 September 2001 (2001-09-26) -& EP 1 331 156 A (KAYABA INDUSTRY CO., LTD) 30 July 2003 (2003-07-30)

## Description

### BACKGROUND OF THE INVENTOIN

### 1. Field of the Invention

The present invention relates to a flow controlling apparatus for a power steering controlling electrically in constant fluid of operational oil from oil pump to a hydraulic device to assist a steering wheel of a vehicle by hydraulic power.

### 2. Description of the Related Art

It is well known for a flow controlling apparatus for a power steering to keep in a predetermined value the discharged fluid of operational oil to a hydraulic device in accordance with such a vehicle speed or a steering angle of a steering wheel, for example as shown in EP 1 108 638 A or Japanese laid-open patent publication No. 2001-163233. In this related art, the discharged fluid is controlled by a variable valve equipped in an outlet of the flow controlling apparatus by energizing a solenoid. The solenoid is controlled by an electric signal relating to the vehicle speed or the steering angle through control means of a micro computer. The solenoid is energized in accordance with the electric signal to operate the variable valve in order to control the amount of fluid to the hydraulic device of the power steering.

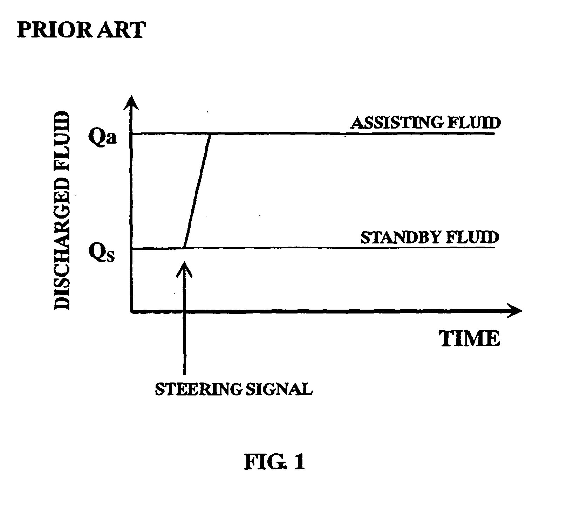

In the well known power steering, since the solenoid is energized in accordance with the electric signal relating to the vehicle speed or the steering angle of the steering wheel to operate the variable valve in order to control the amount of fluid to the hydraulic device of the power steering, it is best way for energy saving that the amount of discharged fluid is zero where the steering is not operated by judging the steering angle. However, where the amount of discharged fluid is zero, it has a possibility to happen that there occurs seizure in the hydraulic device or unsteady driving based on disturbance such a kick-back and so on in straight run. Further, it needs time at a rapid steering for the discharged fluid to increase to a suitable amount, causing late response of power assistance by the hydraulic device. Because of this reason, the well known flow controlling apparatus keeps minimum fluid discharged to the hydraulic device of the power steering as standby fluid for waiting to assist the steering wheel. Therefore, it is easy to reach to the predetermined amount of fluid from the standby fluid even though at rapid steering. The well known electrically controlled flow controlling device controls in only one or single way of transition from standby fluid Qs to suitable amount of fluid (Qa) needed for assisting by the hydraulic device, that is to say time constant relating to stand up from Qs to Qa is only one or single, as shown in Fig. 1. Therefore, where the time constant is set for the rapid steering in the control means, the assisting force is suddenly and unexpectedly risen at a slow steering thereby to make the driver feel incompatibility.

### SUMMARY OF THE INVENTION

In view of the previously mentioned circumstances, it is an object of the present invention to provide a flow controlling apparatus for a power steering preventing a driver from feeling incompatibility.

In order to achieve the above and other objects, the present invention provides the flow controlling apparatus for the power steering mainly comprising control means to change transition in accordance with a steering angular velocity of the steering wheel. The transition is a status from standby fluid, for waiting to assist the steering wheel, to assisting fluid to assist the steering wheel by hydraulic power. By this construction of the present invention, the transition process from the standby fluid to the assisting fluid is easily changed so that it does not make the driver feel incompatibility and therefore do perform to give the assisting force effectively.

Second aspect of the flow controlling apparatus for the power steering of the present invention is that said control means control in such a way that the transition process is rapid when the steering angular velocity is large, and the transition process is slow when the steering angular velocity is small. More particularly, another aspect of the flow controlling apparatus for the power steering is that said control means set time constant in small value so that the transition process is rapid when the steering angular velocity is large, and set time constant in large value so that the transition process is slow when the steering angular velocity is small. By this construction of the present invention, at the rapid steering the transition from standby fluid to assisting fluid is performed swiftly so that the suitable power assistance is done. Thereby, the driver does not feel the caught status based on rapid increasing of torque response force, and the smooth power assistance is performed. At the slow steering the transition from standby fluid to assisting fluid is performed slowly so that the assisting force is not applied rapidly. Thereby, the driver does not feel incompatibility.

### BRIEF DESCRIPTION OF THE DRAWINGS

Various other objects, features and many of the attendant advantages of the present invention will be readily appreciated as the same becomes better understood by reference to the following detailed description of the preferred embodiments when considered in connection with the accompanying drawings, in which:
Fig. 1 is a graph showing operational situation in a related art;
Fig. 2 is an explanatory drawing of a whole construction of one embodiment of the present invention;
Fig. 3 is a vertical sectional view of a whole construction of a variable throttle mechanism and a solenoid mechanism consisting of main portions of one embodiment of the present invention; and
Fig. 4 is a graph showing operational situation in one embodiment of the present invention.

### DETAILED DESCRIPTION OF THE PREFERRED EMBODIMENTS

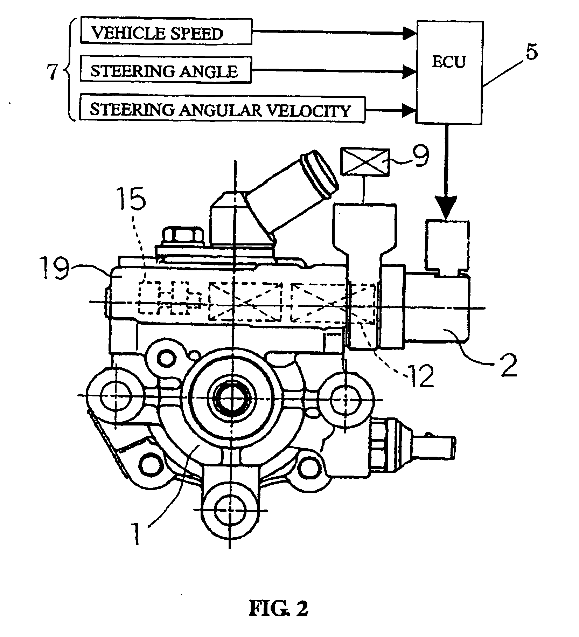

A preferred embodiment of a flow controlling apparatus for a power steering according to the present invention will be described referring to Fig. 2 to Fig. 4. In Fig. 2, the power steering includes a hydraulic device 9 and the hydraulic device 9 receives pressurized discharged operating oil from a pump 1 through the flow controlling apparatus in order to assist a rotation of a steering wheel of a vehicle by hydraulic power. The flow controlling apparatus controls discharged oil suitably to feed to the hydraulic device 9 and is installed in an outlet portion of the pump 1 through which the pump 1 outputs the discharged oil. The flow controlling apparatus comprises mainly a variable throttle mechanism 12, a spool 15 and control means 5. The variable throttle mechanism 12 is controlled by a linear solenoid mechanism 2 in correspondence to a predetermined value of an energized current. When a volume of fluid of discharged oil from the pump 1 to the hydraulic device 9 is exceeded over a predetermined value, the spool 15 feeds back the exceeded discharged oil to a bypass passage 17 in accordance with differential pressure in between upper stream and lower stream of the variable throttle mechanism 12. The bypass passage 17 is provided to connect to an inlet port of the pump 1. Control means 5 control energized current to the linear solenoid mechanism 2 suitably in correspondence with such running state of the vehicle or steering state of the steering wheel.

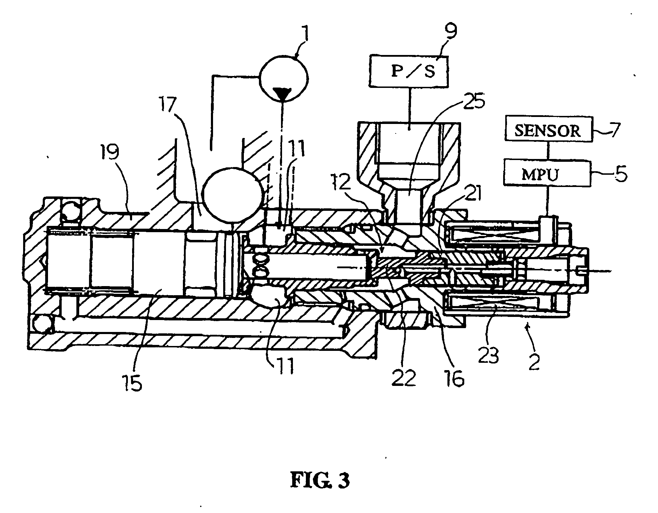

The spool 15, the variable throttle mechanism 12 and other components are installed in a housing of the pump 1 as shown in Fig. 3. The spool 15 is slidably mounted in the housing 19 in order to feed mainly discharged oil from the pump 1 through an introducing chamber 11, formed in a side of the head of the spool 15, to the hydraulic device 9 and feed back the exceeded discharged oil from the pump 1 to the bypass passage 17. The linear solenoid mechanism 2 is mounted on a union 16 at one end of the housing 19 having the bypass passage 17 and so on. Mounted in the union 16 is the variable throttle mechanism 12, the opening degree of which is controlled by the linear solenoid mechanism 2. Around the variable throttle mechanism 12 there is an outlet 25, through which controlled discharged oil is discharged to the hydraulic device 9 composing the power steering. The spool 15 is operated according to the differential pressure in between the upper and lower stream of the variable throttle mechanism 12 in order that exceeded discharged oil is fed back to the bypass passage 17.

The linear solenoid mechanism 2 comprises a valve body 22 forming the variable throttle mechanism 12; a movable armature core 21 connected to the valve body 22; coils 23 mounted outward the movable armature core 21 to move thereof slidably; and an un-illustrated spring to charge resistance to the movable armature core 21 in order to hold thereof in desired position of the movable armature core 21 in accordance with the amount of energized current to the coils 23. Control means 5 inputs the energized current to coils 23 composing the solenoid mechanism 2 in order to control operations of the linear solenoid mechanism 2, as shown in Fig. 2. Into control means 5 are fed various signals from such a vehicle speed sensor, a steering angle sensor of the steering wheel, a steering angular velocity sensor of the steering wheel to perform predetermined calculation. The control means 5 is constructed by a micro computer with a micro processor (MPU), performing predetermined calculation based on read only memory (ROM) data input previously. After receiving and calculating input signals, control means 5 orders predetermined energized current to the linear solenoid mechanism 2.

The operation of the embodiment of the present invention will be described hereinafter referred to Fig. 2 to Fig. 4. After the pump 1 is operated to start, discharged oil from the pump 1 is introduced into the introducing chamber 11 and thereafter fed into the hydraulic device 9 constructed the power steering via the variable throttle mechanism 12 controlled by the linear solenoid mechanism 2 and the outlet 25, thereby assisting the steering wheel of the vehicle by the hydraulic power. At that time, where turning velocity of the pump rotor increased to discharge the discharged oil exceeding over the predetermined value, the exceeded discharged oil is fed back to the bypass passage 17 shown in Fig. 3. Therefore, fluid discharged from the outlet 25 is maintained in constant. This means the stage of constant fluid control for the pump. The fluid in constant control stage is determined by the predetermined calculation by control means 5 based on information from various sensors 7 including the vehicle speed sensor, etc.

In addition to this basic operation of the embodiment, it controls next operation.

It is well known in the power steering that the electrically controlled flow controlling apparatus controls fluid as previously described in Fig. 1. Namely, the well known electrically controlled flow controlling device controls in such a way that predetermined standby fluid Qs is fed from a flow controlling device for waiting to assist the steering wheel in order to prevent seizure in a hydraulic device, unsteady driving in straight run, late response of power assistance by the hydraulic device, and so on. This means the stage of standby fluid control for a pump. In this standby stage, after a steering wheel is operated, a linear solenoid mechanism is operated to keep suitable amount of fluid (Qa) needed for assistance by the hydraulic device on the basis of commands from control means, thereby discharging the suitable amount of fluid to the hydraulic device constructing a power steering for assisting the steering wheel by hydraulic fluid. In the related art of the flow controlling apparatus of the well known power steering, the transition process from the standby fluid (Qs) to assisting fluid (Qa) is constant or stable, that is to say time constant relating to stand up from Qs to Qa is only one or single. Therefore, where the time constant is set as relatively small value for a rapid steering in the control mans, the assisting force is suddenly and unexpectedly risen at a slow steering thereby to make the driver feel incompatibility. On the contrary, where the time constant is set as relatively large value for a slow steering in the control means, the suitable assisting force is not applied immediately at the rapid steering thereby to make the driver feel the shocked steering response. These phenomena are so-called caught status based on late response in power assistance. The caught status make the driver feel incompatibility.

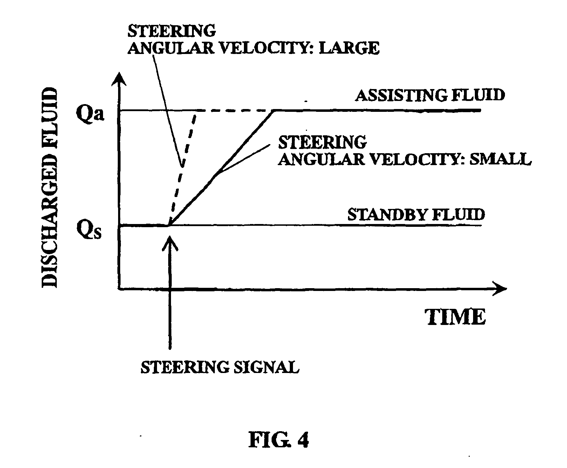

In order to solve the problem in the related art, in the embodiment of the present invention the control means 5 changes said time constant in accordance with the steering status of the steering wheel, in detail in accordance with the steering angular velocity of the steering wheel. The embodiment of the present invention changes the value of the transition from the standby fluid (Qs) to assisting fluid (Qa), that is to say to set said time constant as the small value at the large steering angular velocity, that is the rapid steering, as shown by a dotted line in Fig. 4 and to set said time constant as the large value at the small steering angular velocity, that is the slow steering, as shown by a solid line in Fig. 4. By these setting of the value of time constant, at the rapid steering the transition from standby fluid to assisting fluid is performed swiftly so that the suitable power assistance is done. Thereby, the driver does not feel the caught status based on rapid increasing of torque response force, and the smooth power assistance is performed. At the slow steering the transition from standby fluid to assisting fluid is performed slowly so that the assisting force is not applied rapidly. Thereby, the driver does not feel incompatibility. In detail operation, the control means 5 control the energized current as 0.2 A (ampere) to the coils 23 thereby to move the movable armature core 21 so that relatively small amount of the opening degree of the variable throttle mechanism 12 is kept in order to keep the discharged standby fluid Qs from the outlet 25 in 21/min. for standby fluid, for waiting to assist the steering wheel in order to prevent seizure in the hydraulic device 9, unsteady driving in straight run, late response of power assistance by the hydraulic device 9, and so on. And the control means 5 control the energized current as 0.8 A (ampere) to the coils 23 thereby to move the movable armature core 21 so that relatively large amount of the opening degree of the variable throttle mechanism 12 is kept in order to keep the discharged assisting fluid Qa from the outlet 25 in 8 1 /min. for steering fluid, for assisting the rotation of the steering wheel by hydraulic power. In the transition process from Qs to Qa, the control means 5 change the energized current from 0.2 A to 0.8 A continuously with the above-described predetermined time constant which is unchangeable during this identified transition process. Fig. 3 shows only two types of transition for easy understanding, however the control means 5 change continuously the value of time constant according to the variation of the steering angular velocity.

While the invention has been described in detail with reference to the preferred embodiment, it will be apparent to those skilled in the art that the invention is not limited to the present embodiment, and that the invention may be realized in various other embodiments within the scope of the claims. For example, in the above-mentioned embodiment of the present invention, the time constant is changed by the control means 5 according to the steering angular velocity, however, it may be changed in accordance with the vehicle speed or the steering angle.

Furthermore, the technological components described in this specification and illustrated in the drawings can demonstrate their technological usefulness independently through various other combinations which are not limited to the combinations described in the claims made at the time of application. Moreover, the art described in this specification and illustrated in the drawings can simultaneously achieve a plurality of objectives, and is technologically useful by virtue of realizing any one of these objectives.

It is one object of the present invention to provide a flow controlling apparatus for a power steering preventing a driver from feeling incompatibility.

The flow controlling apparatus for the power steering comprises; a variable throttle mechanism installed in the pump to change fluid of discharged oil from the pump to a hydraulic device; a linear solenoid mechanism controlling the variable throttle mechanism by said predetermined energized current; a spool feeding back the exceeding fluid of said discharged oil to a bypass passage of the pump in accordance with differential pressure between upstream and downstream at the variable throttle mechanism when the exceeding fluid exceeds a predetermined value; and control means controlling the energized current to change transition process in accordance with a steering angular velocity of the steering wheel according to claim 1.

## Claims

1. A flow controlling apparatus for a power steering
comprising:
a pump (1);
a hydraulic device (9) constructing said power steering and receiving discharged oil from said pump (1) to assist a steering wheel by hydraulic power;
a variable throttle mechanism (12) installed in said pump (1) to change the flow of said discharged oil from said pump (1) to said hydraulic device (9);
a linear solenoid mechanism (2) controlling said variable throttle mechanism (12) by a predetermined energizing current;
a spool (15) feeding back the exceeding fluid of said discharged oil to a bypass passage (17) of said pump (1) in accordance with a differential pressure between upstream and downstream at said variable throttle mechanism (12) when said exceeding fluid exceeds a predetermined value; and
control means (5) controlling said energizing current to change a transition process from standby fluid to assisting fluid in accordance with one of a steering angular velocity of said steering wheel, a vehicle speed and a steering angle of said steering wheel,
wherein said power steering is in a standby stage by said standby fluid for waiting to assist said steering wheel and in an assisting stage by said assisting fluid for assisting said steering wheel by said hydraulic power;
wherein said control means (5) controls in such a way that said transition process is rapid when said steering angular velocity is large, and said transition process is slow when said steering angular velocity is small; and
wherein said control means (5) sets a time constant in small value so that said transition process is rapid when said steering angular velocity is large, and sets the time constant in large value so that said transition process is slow when said steering angular velocity is small.

## Patentansprüche

1. Strömungssteuergerät für eine Lenkhilfe, mit:
einer Pumpe (1);
einer Hydraulikvorrichtung (9), die die Lenkhilfe bildet und von der Pumpe (1) abgegebenes Öl empfängt, um ein Lenkrad durch Hydraulikkraft zu unterstützen;
einem Mechanismus (12) mit variabler Drossel, der in der Pumpe (1) eingebaut ist, um die Strömung des abgegebenen Öls von der Pumpe (1) zu der Hydraulikvorrichtung (9) zu ändern;
einem Linearsolenoidmechanismus (2), der den Mechanismus (12) mit variabler Drossel durch einen vorbestimmten Erregerstrom zu kontrollieren;
einem Schieber (15), der das übermäßige Fluid des abgegebenen Öls zu einem Umgehungsdurchgang (17) der Pumpe (1) in Übereinstimmung mit einem Differenzdruck zwischen einer stromaufwärtigen Seite und einer stromabwärtigen Seite an dem variablen Drosselmechanismus (12) rückführt, wenn das übermäßige Fluid einen vorbestimmten Wert übersteigt; und
einer Steuereinrichtung (5), die den Erregerstrom zum Ändern eines Vorgangs eines Übergangs von Bereitschaftsfluid zu Unterstützungsfluid in Übereinstimmung mit einem von einer Lenkwinkelgeschwindigkeit des Lenkrads, einer Fahrzeuggeschwindigkeit und einem Lenkwinkel des Lenkrads steuert,
wobei sich die Lenkhilfe durch das Bereitschaftsfluid in einem Ruhezustand zum Warten auf ein Unterstützen des Lenkrads und durch das Unterstützungsfluid in einem Unterstützungszustand zum Unterstützen des Lenkrads durch die Hydraulikkraft befindet;
wobei die Steuereinrichtung (5) auf eine derartige Art und Weise steuert, dass der Übergangsvorgang schnell ist, wenn die Lenkwinkelgeschwindigkeit groß ist, und dass der Übergangsvorgang langsam ist, wenn die Lenkwinkelgeschwindigkeit klein ist; und
wobei die Steuereinrichtung (5) eine Zeitkonstante auf einen kleinen Wert festsetzt, so dass der Übergangsvorgang schnell ist, wenn die Lenkwinkelgeschwindigkeit groß ist, und die Zeitkonstante auf einen großen Wert festsetzt, so dass der Übergangsvorgang langsam ist, wenn die Lenkwinkelgeschwindigkeit klein ist.

## Revendications

1. Dispositif de commande de débit pour une direction assistée comprenant :
une pompe (1) ;
un dispositif hydraulique (9) formant ladite direction assistée et recevant de l'huile refoulée de ladite pompe (1) pour assister un volant de direction par une puissance hydraulique ;
un mécanisme d'obturateur variable (12) installé dans ladite pompe (1) pour changer le débit de ladite huile refoulée de ladite pompe (1) vers ledit dispositif hydraulique (9) ;
un mécanisme à solénoïde linéaire (2) commandant ledit mécanisme d'obturateur variable (12) par un courant d'alimentation en énergie prédéterminé ;
un tiroir (15) réalimentant le fluide en excès de ladite huile refoulée vers un passage de dérivation (17) de ladite pompe (1) selon une pression différentielle entre l'aval et l'amont dudit mécanisme d'obturateur variable (12) quand ledit fluide en excès dépasse une valeur prédéterminée ; et
des moyens de commande (5) commandant ledit courant d'alimentation en énergie pour changer le processus de transition de fluide au repos à fluide d'assistance selon l'une d'une vitesse angulaire de direction dudit volant de direction, d'une vitesse de véhicule et d'un angle de direction dudit volant de direction,
dans lequel ladite direction assistée est dans un état de repos par ledit fluide au repos pour attendre d'assister ledit volant de direction et dans un état d'assistance par ledit fluide d'assistance pour assister ledit volant de direction par ladite puissance hydraulique ;
dans lequel lesdits moyens de commande (5) commandent de telle manière que ledit processus de transition est rapide quand ladite vitesse angulaire de direction est grande, et ledit procédé de transition est lent quand ladite vitesse angulaire de direction est petite ; et
dans lequel lesdits moyens de commande (5) règlent une constante de temps à une petite valeur de telle manière que ledit processus de transition est rapide quand ladite vitesse angulaire de direction est grande, et règle la constante de temps à une valeur grande de telle manière que ledit processus de transition est lent quand ladite vitesse angulaire de direction est petite.
